(19) Europäisches Patentamt
European Patent Office
Office européen des brevets

(11) Publication number: 0 352 868
A1

(12) **EUROPEAN PATENT APPLICATION**

(21) Application number: 89201989.4

(51) Int. Cl.4: C08G 73/12

(22) Date of filing: 27.07.89

(30) Priority: 29.07.88 US 226165

(43) Date of publication of application: 31.01.90 Bulletin 90/05

(84) Designated Contracting States: DE FR GB IT

(71) Applicant: SHELL INTERNATIONALE RESEARCH MAATSCHAPPIJ B.V.
Carel van Bylandtlaan 30
NL-2596 HR Den Haag(NL)

(72) Inventor: Wang, Pen Chung
13603 Pinerock Lane
Houston Texas 770833(US)

(74) Representative: Aalbers, Onno et al
P.O. Box 302
NL-2501 CH The Hague(NL)

(54) **Bismaleimide-containing thermosetting composition.**

(57) The processability and flex strength of a bismaleimide resin can be improved by blending the resin with an allylphenol novolac or allylphenol novolac ether resin.

EP 0 352 868 A1

## BISMALEIMIDE-CONTAINING THERMOSETTING COMPOSITION

Good high-temperature properties and the ability to retain these properties under moist conditions make bismaleimide resins excellent matrix materials for reinforced composites. However, bismaleimide resins tend to be somewhat brittle. The fracture toughness of bismaleimides can be improved by increasing the molecular weight of the molecule by, for example, using a bismaleimide/methylene dianiline adduct. The higher melting point of the resulting monomer, however, makes the resin difficult to process.

It is therefore an object of the invention to provide a bismaleimide-based composition which has both improved fracture toughness and good processing properties.

According to the invention, a composition is provided comprising

a) a bismaleimide and

b) an allylphenol novolac having the formula

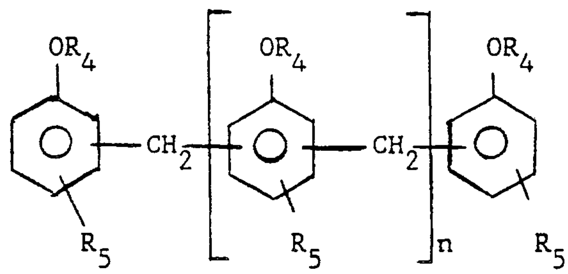

in which $R_4$ is selected from H, $C_{1-10}$ alkyl, aryl and alkenyl; $R_5$ contains an allyl group; and n is a number from 0 to 8.

The preferred bismaleimides are N,N′-bisimides of unsaturated carboxylic acids which can be represented by the formula

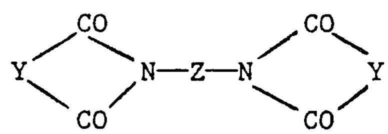

in which Y is a substituted or unsubstituted divalent radical containing at least 2 carbon atoms, preferably 2 to 6 carbon atoms, and a carbon-carbon double bond, and Z is a divalent radical containing at least 1, generally 1 to 40 carbon atoms. Z can be aliphatic, cycloaliphatic, aromatic or heterocyclic. A preferred class of bismaleimides is derived from an aromatic diamine and can be represented by the formula

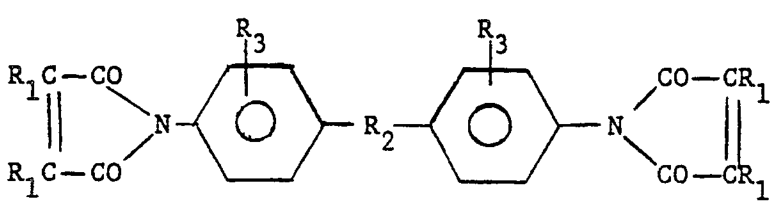 .

in which each $R_1$ is selected independently from H, $C_{1-2}$ alkyl or halide; $R_2$ is selected from divalent hydrocarbon radicals containing from about 1 to about 6 carbon atoms, -O-, $-SO_2-$, -COO-, -CONH-, -CO- and -S-S-; and each $R_3$ is selected independently from H, $C_{1-3}$ alkyl and halide.

Examples of such bismaleimides include

N,N′-4,4′-methylene-bis-maleimide

N,N′-4,4′-ethylene-bis-maleimide

N,N′-hexamethylene-bis-maleimide

N,N′-meta-phenylene-bis-maleimide

N,N′-p-phenylene-bis-maleimide

N,N′-4,4′-diphenylmethane-bis-maleimide
N,N′-4,4′-diphenylether-bis-maleimide
N,N′-4,4′-diphenylsulphone-bis-maleimide
N,N′-4,4′-dicyclohexylmethane-bis-maleimide
N,N′-4,4′-(3,5-diphenylpyridine)-bis-maleimide
N,N′-pyridinidi-2,6-Y-bis-maleimide
N,N′-α,α′-4,4′-dimethylenecyclohexane-bis-maleimide
N,N′-meta-xylelene-bis-maleimide
N,N′-4,4′-diphenylcyclohexane-bis-maleimide
N,N′-meta-phenylene-bis-dichloromaleimide
N,N′-4,4′-diphenylmethane-bis-citraconimide
N,N′-4,4′-(1,1-diphenylpropane)bis-maleimide
N,N′-4,4′-(1,1,1-triphenylethane)bis-maleimide
N,N′-4,4′-triphenylmethane-bis-maleimide
N,N′-3,5-(1,2,4-triazole)bis-maleimide

and various N,N′-bismaleimides disclosed in U.S. 3,562,223, 4,211,860 and 4,211,861. Bismaleimides can be prepared by methods known in the art, such as described in U.S. 3,018,290, for example.

The bismaleimide resin can also be an imide oligomer according to the formula

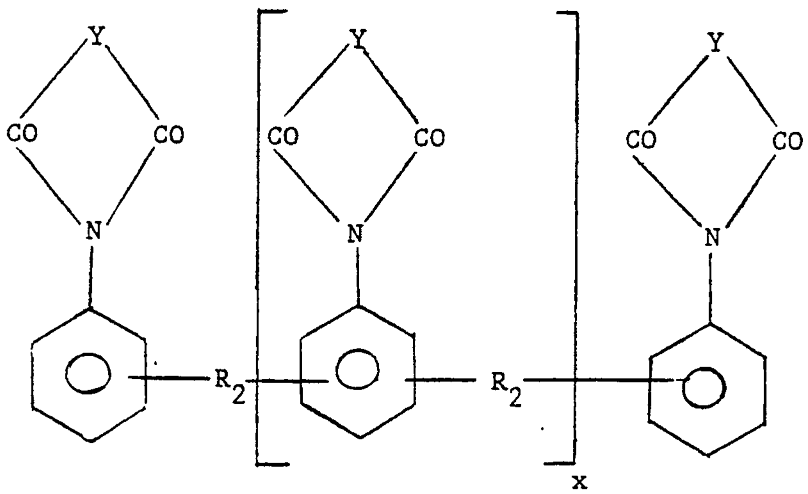

in which x is a number within the range of 0.1 to 2. Such oligomers can be prepared as described in U.S. 4,113,737, for example.

The preferred bismaleimide resin is N,N′-4,4′-diphenylmethane bismaleimide. The bismaleimide can contain various additives and modifiers as processing aids. The bismaleimide resin component can be a reaction product or prepolymer of a bismaleimide and an effective chain-extending agent such as an amine group-containing compound. Suitable amine group-containing compounds include diamines represented by the general formula $(H_2N)_nQ$ and aminophenols represented by the general formula $(NH_2)_nQ(OH)_n$, in which Q is a divalent aromatic or alicyclic group and n is a number from 1 to about 4, and polyamines such as hexamethylene tetramine, polyethylene imine, triethylene diamine, imidazole, 2-methylimidazole, and the like. Such reaction products can be prepared by methods known in the art, such as contacting 0.5 to 1.2 mole of the chain-extending agent per mole of the bismaleimide in an organic solvent at a temperature of from 40° to 250° for a time of from 5 minutes to 5 hours. The bismaleimide can be, for example, a hydrazide-modified bismaleimide as described in U.S. 4,211,860 and 4,211,861. Suitable N,N′-unsaturated bismaleimide resins are available commercially from Technochemie GMBH as Compimide resins, for example (Compimide is a registered trade mark).

The invention composition includes an allylphenol novolac or allylphenol novolac ether component (herein referred to collectively as "allylphenol novolacs") , including those compounds which can be described by the general formula

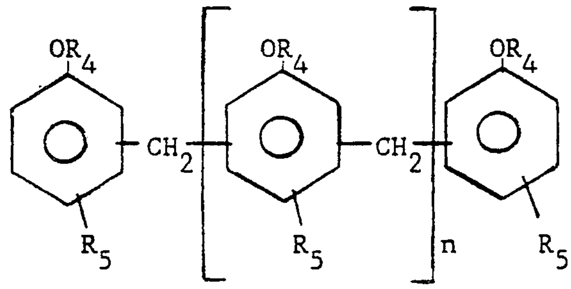

in which $R_4$ can be H, $C_{1-10}$ alkyl, aryl or alkenyl; $R_5$ is a moiety which contains a reactive allyl group $-CH_2-CH=CH_2$ and n is a number within the range of 0 to about 8. The allylphenol novolac acts as a reactive diluent for the composition and will be present in an amount effective to decrease the viscosity of the system, generally from about 5 to about 95, preferably about 25 to about 75, weight percent, based on the weight of the composition. Examples of such allylphenol novolacs include 2-allylphenol novolac, 4-allylphenol novolac, 4-allylcresol novolac, 2-allylanisole novolac, and 2-allylcresol novolac. The preferred allylphenol novolacs are liquid at room temperature and have a molecular weight within the range of about 250 to about 1500, and include 2-allylphenol novolacs according to the formula

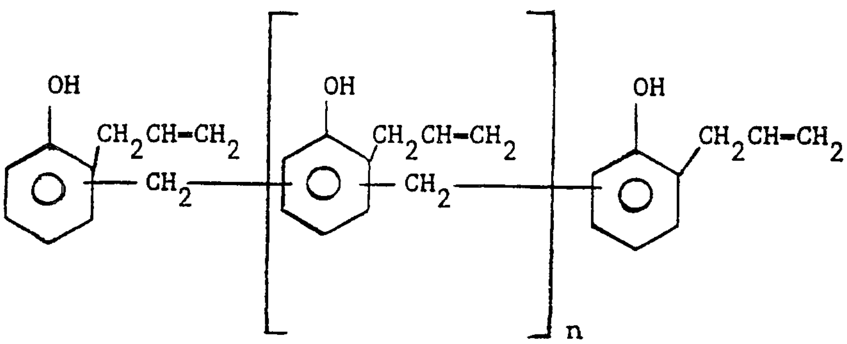

in which n is within the range of from 0 to 8, preferably from 3 to 5. 2-Allylphenol novolacs can be prepared by methods known in the art, such as the acid-catalyzed condensation reaction of 2-allylphenol with formaldehyde.

The bismaleimide and the allylphenol novolac components of the composition can be combined in any suitable manner, such as heating a mixture of the two components to a temperature within the range of from 80° C to 150° C, preferably 100° C to 120° C, with stirring to obtain a homogeneous liquid mixture.

The mixture can then be cured, in a mould or press for example, at a temperature of at least 170° C, generally for a time of at least 2 hours. Thermal cure of the composition can be in a staged process, for example, heating in several 2-10 hour stages at progressively increasing temperatures. It has been found that good cure properties are obtained by heating the mixture in temperature stages of 180° C for 2 hours, 210° C for 2 hours, then 250° C for 6 hours.

The invention composition can, for applications such as prepregging, include an organic solvent or diluent present in an amount effective to decrease the viscosity of the system for easier processing. Polar organic solvents such as ketones, alcohols and glycol ethers, for example, are suitable. The proportion of solid components in the composition will vary widely depending upon the amount of other constituents present and the intended application of the composition, but for prepregging applications the solvent will generally constitute at least about 15 weight percent of the total weight of the bismaleimide/allylphenol novolac solution. The solution makes up the "varnish" or laminating composition.

For preparation of reinforced laminates from the varnish, a fibrous substrate of glass, carbon, quartz, Kevlar, polyester, polytetrafluoroethylene, polybenzothiozole, boron, paper or like material, in chopped, mat or woven form, is first impregnated with the varnish. The resin composition can be applied to the fibrous reinforcing material from the melt or solution by methods known in the art. A prepreg is formed by heating the impregnated substrate in an oven at a temperature sufficient to remove the solvent and to partially cure without gelation, or "B-stage," the blended resin system, generally from 40° C to 200° C, preferably from 150° C to 190° C, for a time of up to 100 minutes, preferably from 30 seconds to 2 minutes. A laminate is fabricated by subjecting a set of layered prepregs to conditions effective to cure the resins and to integrate

the prepregs into a laminated structure. The laminate can optionally include one or more layers of a conductive material such as copper. Laminating conditions generally include a time of from 30 minutes to 4 hours, preferably from 1 hour to 2 hours, a temperature of from 160 °C to 300 °C, preferably from 170 °C to 200 °C and a pressure of 357 to 3570 kPa. The composition can include optional constituents such as inorganic fillers and flame retardants, for example. The laminate can be optionally "post-cured" by heating at a temperature of from 200 °C to 230 °C at ambient pressure for 1 to 6 hours to improve thermal properties. The prepreg, or a laminate prepared from a plurality of prepregs, is then cured, generally at a temperature of from 160 °C to 300 °C for 30 minutes to 4 hours and a pressure of from 1142 to 1714 kPa, to form a structural composite article.

EXAMPLE 1

This example illustrates the preparation of 2-allylphenol novolac. To 268.0g (2.0 moles) of 2-allylphenol heated at 90 °C were added dropwise 126.5g (1.6 moles as $CH_2O$) of formalin (37% $CH_2O$) and 5.0g (0.055 mole) of oxalic acid over a period of 1 hour. The reaction was allowed to proceed at 90 °C for 8 hours. The reaction mixture was cooled to 40 °C, separated from the aqueous layer, washed with 30 ml of hot water and then dehydrated under reduced pressure until the temperature reached 160 °C to obtain a liquid resin. The resulting 2-allylphenol novolac was cured at 180 °C for 2 hours, 210 °C for 2 hours, and 250 °C for 6 hours to give a cured material with a glass transition temperature of 196 °C.

EXAMPLE 2

This example describes the preparation and cure of a 50:50 (weight:weight) mixture of a methylene dianiline-derived bismaleimide and 2-allylphenol novolac. 50.0g of 2-allylphenol novolac and 50.0g of bismaleimide were placed in a 600 ml of beaker and heated in a heating mantle between 100 °C and 120 °C to obtain a homogeneous mixture. The mixture was degassed in vacuo (0.7 mm) and poured into a 6" x 6" mold preheated to 180 °C. The mixture was then cured in an oven at 180 °C for 2 hours, 210 °C for 2 hours, and 250 °C for 6 hours. The resulting cured material had a Tg of 251 °C. The results of fracture toughness and flux measurements are shown in Table 1.

EXAMPLE 3

This example describes the preparation and cure of a 30:70 (w:w) mixture of 2-allylphenol novolac and bismaleimide with methylene dianiline extending agent. 25.0g of allylphenol novolac, 58.8g of bismaleimide and 16.2g of methylene dianiline were placed in a 600 ml of beaker and heated in a heating mantle between 100 °C and 120 °C to obtain a homogeneous mixture. The mixture was degassed in vacuo (0.7 mm) and poured into a 6" x 6" mold preheated to 180 °C. The mixture was then cured in an oven at 180 °C for 2 hours, 210 °C for 2 hours, and 250 °C for 6 hours. The resulting cured material had a Tg of 284 °C. The results of fracture toughness and flux measurements are shown in Table 1.

EXAMPLE 4

This example describes the preparation and cure of a 50:50 (w:w) mixture of 2-allylphenol novolac and bismaleimide in the presence of p-aminophenol extending agent. 43.0g of allylphenol novolac, 43.0g of bismaleimide and 6.54g of p-aminophenol were placed in a 600 ml of beaker and heated in a heating mantle between 100 °C and 120 °C to obtain a homogeneous mixture. The mixture was degassed in vacuo (0.7 mm) and poured into a 6" x 6" mold preheated to 180 °C. The mixture was then cured in an oven at 180 °C for 2 hours, 210 °C for 2 hours, and 250 °C for 6 hours. The resulting cured material had a Tg of 189 °C. The results of fracture toughness and flux measurements are shown in Table 1.

EXAMPLE 5

Comparative viscosity measurements were made for bismaleimide (Aldrich, m.p. 156 °C) and a 50/50

wt. blend of bismaleimide/allylphenol novolac ($MW_n$ 394). Dynamic viscosity (centipoises) vs temperature (5°C/min) measurements were made using a Rheometrics 605 mechanical spectrometer. The results are shown in Table 2.

TABLE 1

| | Tg[a] | Fracture Toughness[b] | Flex[c] | | |
|---|---|---|---|---|---|
| | | | Strength | Modulus | Elongation |
| Bismaleimide | 275°C | 200~300[e] | | | |
| 50/50Bismaleimide/Allylphenol novolac | 251°C | 535 | 19.9 | 565 | 4.2% |
| Bismaleimide/Allylphenol novolac/MDA | 284°C | 546 | 17.2 | 692 | 3% |
| Bismaleimide/Allylphenol novolac/Aminophenol | 189°C | 474 | 21.4 | 670 | 3.8% |
| Allylphenol novolac | 196°C | —[d] | | | |

a) Glass transition temperature was measured using differential scanning calorimetry (DSC) analysis.
b) Fracture toughness was determined using the compact specimen according to ASTM E 399-83; units are psi-√in.
c) Flexural properties (dry, room temperature) were determined by a method based on ASTM 790.
d) Not measured; brittle oligomer.
e) Various values reported in the literature, e.g., Stenzenberger et al., 31st International SAMPE Symposium, Vol. 31, p 920 (1986).

TABLE 2

| Viscosity vs Temperature | | | | | | | | | |
|---|---|---|---|---|---|---|---|---|---|
| | 40°C | 60°C | 80°C | 100°C | 120°C | 140°C | 160°C | 180°C | 200°C |
| BMI | Solid | Solid | Solid | Solid | Solid | Solid | 93 | 69 | 54 |
| BMI/APN | $1.6 \times 10^5$ | $1.6 \times 10^4$ | 3121 | 812 | 200 | 50 | 26 | 53 | 48 |

## Claims

1. A composition comprising
   a) a bismaleimide and
   b) an allylphenol novolac having the formula

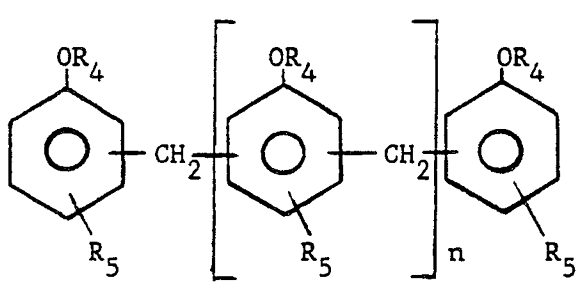

in which $R_4$ is selected from H, $C_{1-10}$ alkyl, aryl and alkenyl; $R_5$ contains an allyl group; and n is a number from 0 to 8.

2. The composition of claim 1 in which the allylphenol novolac is a normally-liquid 2-allylphenol novolac.

3. The composition of claim 1 or 2 in which the allylphenol novolac is present in the composition in an amount within the range of 5 to 95 weight percent, based on the weight of components (a) and (b).

4. The composition of any one of claims 1 to 3 in which the bismaleimide comprises N,N′-4,4′-diphenylmethane bismaleimide.

5. The composition of any one of claims 1 to 4 in which the bismaleimide comprises a reaction product of a bismaleimide and an amine group-containing compound.

6. The composition of claim 5 in which the amine group-containing compound is selected from the group consisting of methylene dianiline and p-aminophenol.

7. The composition of any one of claims 1 to 6 which further comprises a fibrous reinforcing agent.

8. The composition of any one of claims 1 to 7 in which the allyphenol novolac is present in an amount within the range of 25 to 75 weight percent, based on the weight of components (a) and (b).

European Patent Office

# EUROPEAN SEARCH REPORT

Application Number

EP 89 20 1989

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 014 816 (CIBA-GEIGY AG)<br>* claims *<br>--- | 1 | C 08 G 73/12 |
| X | EP-A-0 227 598 (CIBA-GEIGY AG)<br>* claims *<br>--- | 1 | |
| X | DE-A-2 743 657 (TOKYO SHIBAURA ELECTRIC CO. LTD.)<br>* claims 1,10,14,15 *<br>--- | 1,3,4 | |
| A | EP-A-0 236 933 (SUMITOMO CHEMICAL COMPANY LTD.)<br>* claims *<br>----- | 1 | |

TECHNICAL FIELDS SEARCHED (Int. Cl.5)

C 08 G 73/00
C 08 L 79/00

The present search report has been drawn up for all claims

| Place of search | Date of completion of the search | Examiner |
|---|---|---|
| BERLIN | 24-10-1989 | BOEKER R.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)